(19) Europäisches Patentamt
European Patent Office
Office européen des brevets

(11) **EP 2 721 727 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **12724971.2**

(22) Anmeldetag: **29.05.2012**

(51) Int Cl.:
*H02M 3/335* (2006.01)          *H02M 1/44* (2007.01)
*H02M 7/217* (2006.01)          *G06F 1/26* (2006.01)

(86) Internationale Anmeldenummer:
**PCT/EP2012/060047**

(87) Internationale Veröffentlichungsnummer:
**WO 2012/171788 (20.12.2012 Gazette 2012/51)**

(54) **SCHALTNETZTEIL, BETRIEBSVERFAHREN UND VERWENDUNG EINES SCHALTNETZTEILS IN EINEM COMPUTER**

SWITCHED-MODE POWER SUPPLY UNIT, METHOD OF OPERATION AND USE OF A SWITCHED-MODE POWER SUPPLY UNIT IN A COMPUTER

BLOC D'ALIMENTATION À DÉCOUPAGE, PROCÉDÉ DE FONCTIONNEMENT ET UTILISATION D'UN BLOC D'ALIMENTATION À DÉCOUPAGE DANS UN ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.06.2011 DE 102011104441**

(43) Veröffentlichungstag der Anmeldung:
**23.04.2014 Patentblatt 2014/17**

(73) Patentinhaber: **Fujitsu Technology Solutions Intellectual Property GmbH**
**80807 München (DE)**

(72) Erfinder: **BUSCH, Peter**
**86179 Augsburg (DE)**

(74) Vertreter: **Epping - Hermann - Fischer Patentanwaltsgesellschaft mbH**
**Schloßschmidstraße 5**
**80639 München (DE)**

(56) Entgegenhaltungen:
DE-A1-102005 055 160      US-A1- 2010 275 052
US-A1- 2010 315 838      US-A1- 2011 110 126

- **"DATA SHEET NXP TEA1654", , 12. Mai 2003 (2003-05-12), XP055051798, Gefunden im Internet: URL:http://www.nxp.com/documents/data_shee t/TEA1654.pdf [gefunden am 2013-01-30]**
- **KUISMA M: "Variable frequency switching in power supply EMI-control: An overview", IEEE AEROSPACE AND ELECTRONIC SYSTEMS MAGAZINE, IEEE SERVICE CENTER, PISCATAWAY, NJ, US, Bd. 18, Nr. 12, 1. Dezember 2003 (2003-12-01), Seiten 18-22, XP011105340, ISSN: 0885-8985, DOI: 10.1109/MAES.2003.1259021**

EP 2 721 727 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Schaltnetzteil für einen Computer oder dergleichen, umfassend wenigstens ein Schaltelement zum Schalten eines Ladestroms zum Laden eines Speicherelementes. Die Erfindung betrifft des Weiteren ein Betriebsverfahren für ein Schaltnetzteil sowie eine Verwendung eines Schaltnetzteils in einem Computer.

Schaltnetzteile in unterschiedlichen Ausführungen sind vielfach bekannt. Gegenüber anderen Netzteiltypen wie insbesondere konventionellen Transformatornetzteilen weisen Schaltnetzteile einen verhältnismäßig hohen Wirkungsgrad auf. Zudem weisen Schaltnetzteile einen verhältnismäßig großen Toleranzbereich für Eingangsspannungen und -frequenzen, eine geringere Baugröße und billigere Herstellungskosten gegenüber konventionellen Netzteilen auf.

Theoretisch übertragen Schaltnetzteile aufgrund ihres Schaltprinzips nur diejenige Leistung, die tatsächlich sekundärseitig benötigt wird. Bekannte Schaltnetzteile haben in einem Arbeitsbereich von etwa 20 bis 100 Prozent ihrer Nennausgangsleistung daher einen Wirkungsgrad von oftmals über 90 Prozent. Leider sinkt der Wirkungsgrad bekannter Schaltnetzteile insbesondere im Bereich unterhalb von 20 Prozent der Nennausgangsleistung erheblich ab. Dies wird unter anderem durch die prinzipbedingte Zerhackung der primärseitigen Eingangsspannung und die damit einhergehenden Schaltverluste verursacht.

Gerade bei Computern und ähnlichen Vorrichtungen, die zum einen im Betrieb eine verhältnismäßig große Eingangsleistung erfordern, in einem Ruhe-, Energiespar- oder Bereitschaftsstand aber nur eine stark verminderte Eingangsleistung aufnehmen, stellt dies ein Problem bezüglich der Energieeffizienz der verwendeten Schaltnetzteile dar.

Aus der US 2010/0315838 A1 sind ein System und ein Verfahren zur Unterdrückung von Störemissionen in einem Schaltnetzteil bekannt. Das Verfahren umfasst die Aktivierung eines Ansteuersignals für unterschiedliche Zeiträume nachdem ein Spannungsversorgungssignal eine vorgegebene Schaltschwelle quert.

Aus dem Datenblatt zum TEA1654 von Philips Semiconductors vom 12. Mai 2003 ist ein integrierter Baustein zur energieeffizienten Ansteuerung von Schaltnetzteilen bekannt. Bei einer niedrigen Ausgangsleistung arbeitet das System mit einer reduzierten Frequenz.

Aus der US 2011/0110126 A1 ist eine Steuerschaltung zur Kompensation einer Frequenzinstabilität zur Benutzung in einem Schaltnetzteil bekannt.

Aus dem Artikel "Variable Frequency Switching in Power Supply EMI-Control" von M. Kuisma, IEEE AES Systems Magazin, Dezember 2003, ist bekannt, das die Verwendung von variablen Frequenzen und Frequenzspreizmodulationsverfahren dazu verwendet werden können, die elektromagnetische Verträglichkeit von Leistungselektronikanwendungen zu verbessern.

Aufgabe der vorliegenden Erfindung ist es, ein Netzteil und ein Betriebsverfahren für ein Netzteil zu beschreiben, das eine hohe Energieeffizienz über einen breiten Bereich von möglichen Ausgangsleistungen ermöglicht. Insbesondere soll die Energieeffizienz im unteren Bereich einer Nennausgangsleistung gegenüber bekannten Schaltnetzteilen verbessert werden ohne dabei akustische Störungen zu verursachen.

Die oben genannte Aufgabe wird erfindungsgemäß durch ein Schaltnetzteil für einen Computer gelöst. Das Schaltnetzteil umfasst wenigstens ein Schaltelement zum Schalten eines Ladestroms zum Laden eines Speicherelements, wenigstens eine sekundäre Ausgangsschaltung zum Bereitstellen einer Ausgangsschaltung, wenigstens eine regelbare Oszillatorschaltung zum Bereitstellen eines Schalttaktes, einen Rauschgenerator zum Erzeugen wenigstens eines Zufallssignals zum Bestimmen einer zufälligen Abweichung und wenigstens eine Steuerschaltung zum Bestimmen eines Ausschaltzeitpunkts für das wenigstens eine Schaltelement. Dabei wird im Betrieb des Schaltnetzteils ein mittlerer Oszillatortakt der Oszillatorschaltung in Abhängigkeit einer Regelgröße der sekundären Ausgangsschaltung so geregelt, dass er in einem voll ausgelasteten Zustand des Computers oberhalb einer oberen Hörschwelle eines menschlichen Benutzers und in einem Bereitschaftszustand des Computers unterhalb der oberen Hörschwelle des menschlichen Benutzers liegt. Eine maximale Amplitude des wenigstens einen Zufallssignals wird in einem Bereich oberhalb von 20 kHz durch die Regelgröße der Ausgangsschaltung reduziert wird und ein Einschaltzeitpunkt für das wenigstens eine Schaltelement in Abhängigkeit von dem mittleren Oszillatortakt und der zufälligen Abweichung bestimmt.

Durch die Verwendung einer regelbaren Oszillatorschaltung kann der Schalttakt eines Schaltelements zum Schalten eines Ladestroms in Abhängigkeit einer Regelgröße, die beispielsweise eine Ausgangsspannung oder -leistung des Schaltnetzteiles angibt, geregelt und insbesondere abgesenkt werden. Durch die zusätzliche Verwendung einer zufälligen Abweichung von einem bestimmten mittleren Oszillatortaktes können dabei unangenehme Nebeneffekte wie insbesondere das Auftreten von hörbaren Pfeifgeräuschen vermieden werden.

Gemäß einer vorteilhaften Ausgestaltung wird der mittlere Oszillatortakt in Abhängigkeit einer Ausgangsleistung der sekundären Ausgangsschaltung geregelt, wobei der mittlere Oszillatortakt monoton mit der Ausgangsleistung ansteigt. Indem der Schalttakt gemeinsam mit der Ausgangsleistung des Schaltnetzteiles ansteigt, können bei gleicher Leistungsfähigkeit bei einer maximalen Auslastung die Schaltverluste insbesondere bei niedriger Ausgangsleistung reduziert werden, so dass die Energieeffizienz des Schaltnetzteils weitgehend unabhängig von der sekundären Ausgangsleistung ist.

Gemäß einer weiteren vorteilhaften Ausgestaltung umfasst die Bandbreite der zufälligen Abweichungen bezogen auf den mittleren Oszillatortakt mindestens eine Oktave. Für einen gegebenen mittleren Oszillatortakt der Oszillatorschaltung beträgt hierdurch ein effektiver maximaler Schalttakt des wenigstens einen Schaltelements mindestens das Doppelte eines effektiven minimalen Schalttaktes. Durch die Verwendung einer zufälligen Abweichung im Umfang von wenigstens einer Oktave können die durch das Schaltnetzteil verursachten akustischen Störungen über einen breiten Frequenzbereich verteilt werden, so dass sie für einen menschlichen Benutzer kaum noch wahrnehmbar sind.

Gemäß einer weiteren vorteilhaften Ausgestaltung wird der Ausschaltzeitpunkt zusätzlich in Abhängigkeit der zufälligen Abweichung geregelt. Dabei erfolg die Regelung derart, dass bei einem Ansteigen des Schalttaktes auf einen Wert oberhalb des mittleren Oszillatortaktes ein Tastverhältnis des wenigstens einen Schaltelements verringert und bei einem Abfallen des Schalttaktes auf einen Wert unterhalb des mittleren Oszillatortaktes das Tastverhältnis des wenigstens einen Schaltelements vergrößert wird. Durch eine gegenläufige Anpassung von der zufälligen Abweichung des Schalttakts und eines momentanen Tastverhältnis kann die Energieübertragung innerhalb eines jeden Schalttaktes auch bei geändertem Schalttakt weitgehend konstant gehalten werden.

Die oben genannte Aufgabe wird ebenso gelöst durch ein Betriebsverfahren zur Regelung eines Schaltnetzteiles mit den Schritten:

- Bestimmen wenigstens einer Regelgröße einer sekundären Ausgangsschaltung,

- Bestimmen eines mittleren Oszillatortakts in Abhängigkeit der wenigstens einen bestimmten Regelgröße, wobei der mittlere Oszillatortakt in einem voll ausgelasteten Zustand des Computers oberhalb einer oberen Hörschwelle eines menschlichen Benutzers und in einem Bereitschaftszustand des Computers unterhalb der oberen Hörschwelle des menschlichen Benutzers liegt,

- Erzeugen wenigstens eines Zufallssignals einer zufälligen Abweichung durch einen Rauschgenerator zum Festlegen einer zufälligen Abweichung von dem mittleren Oszillatortakt, wobei eine maximale Amplitude des wenigstens

- einen Zufallssignals in einem Bereich oberhalb von 20 kHz durch die Regelgröße der Ausgangsschaltung reduziert wird,

- Einschalten eines Schaltelements zum Laden eines Speicherelements in Abhängigkeit von dem mittleren Oszillatortakt und der zufälligen Abweichung und

- Ausschalten des Schaltelements in Abhängigkeit der mindestens einen bestimmten Regelgröße.

Durch die oben genannten Schritte können der Einschaltzeitpunkt und der Ausschaltzeitpunkt eines Schaltelementes in Abhängigkeit einer Regelgröße einer sekundären Ausgangsschaltung und einer zufälligen Abweichung festgelegt werden. Dadurch ist eine bedarfsgerechte Ansteuerung des wenigstens einen Schaltelementes in einem weiten Ausgangsleistungsbereich eines Schaltnetzteiles möglich.

In einer vorteilhaften Ausgestaltung umfasst das Verfahren den zusätzlichen Schritt des gegenläufigen Anpassens einer Einschaltdauer des Schaltelements bezogen auf einen Schalttakt des Schaltelements.

Das oben genannte Schaltnetzteil beziehungsweise das Betriebsverfahren zur Regelung eines Schaltnetzteils eignen sich insbesondere zur Verwendung in einem Computersystem. Insbesondere kann der Schalttakt eines Computerschaltnetzteiles in einem Bereitschaftszustand, etwa im so genannten Standby-Modus oder bei sehr geringer Auslastung eines Prozessors, unter eine Frequenz von 20 kHz, also in den hörbaren Bereich, abgesenkt werden. Dagegen kann dasselbe Netzteil bei weitgehender Auslastung des Computers mit einem Schalttakt von mehr als 20 kHz betrieben werden.

Weitere vorteilhafte Ausgestaltungen der Erfindung sind in den abhängigen Ansprüchen sowie der nachfolgenden ausführlichen Beschreibung von Ausführungsbeispielen näher erläutert.

Die Erfindung wird nachfolgend anhand von unterschiedlichen Ausführungsbeispielen unter Bezugnahme auf die Figuren näher erläutert.

In den Figuren zeigen:

Figur 1     eine schematische Darstellung eines Schaltnetzteils gemäß einer Ausgestaltung der Erfindung,

Figur 2     eine schematische Darstellung eines konventionellen Schaltnetzteils und

Figur 3     ein Ablaufdiagramm eines Betriebsverfahrens zur Regelung eines Schaltnetzteils.

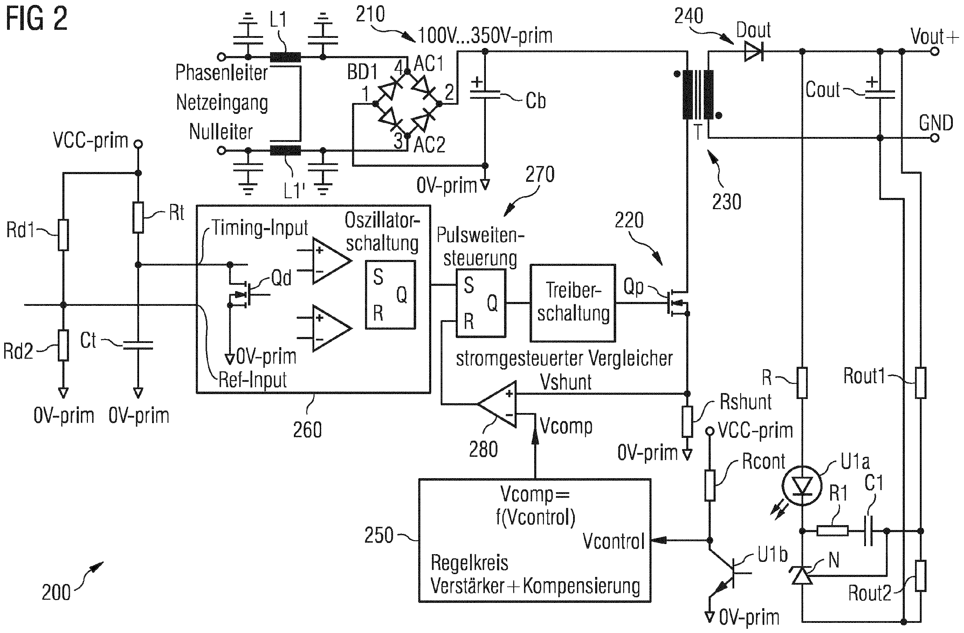

Zum besseren Verständnis der vorliegenden Erfindung wird zunächst das konventionelle Netzteil gemäß Figur 2 beschrieben. Die in der Figur 2 dargestellte Schaltung zeigt ein Schaltnetzteil 200. Bei dem Schaltnetzteil 200 handelt es sich im dargestellten Ausführungsbeispiel um einen Sperrwandler mit durch eine Festfrequenz gewonnenen Schaltreglerimpulsen.

Das Schaltnetzteil 200 umfasst eine primäre Eingangsschaltung 210, ein Schaltelement 220 sowie ein Speicherelement 230. Das Schaltnetzteil 200 umfasst des Weiteren eine sekundäre Ausgangsschaltung 240, eine Steuerschaltung 250, eine Oszillatorschaltung 260, eine Pulsweitensteuerung 270 sowie einen Vergleicher 280.

Im dargestellten Ausführungsbeispiel sorgt ein Brückengleichrichter BD1 der primären Eingangsschaltung 210 für eine Gleichrichtung und ein Speicherkondensator Cb für eine Glättung einer an einem Netzeingang bereitgestellten primären Netzwechselspannung. Über einen als Schaltelement 220 wirkenden Transistor Qb wird die von der primären Eingangsschaltung 210 bereitgestellte Gleichspannung Vprim zur Magnetisierung des Speicherelements 230 zerhackt. Als Speicherelement dient in der Ausgestaltung gemäß Figur 2 ein Spulenkern eines Übertragers T. Die sekundäre Ausgangsschaltung 240 richtet die in eine Sekundärspule des Übertragers T induzierten Spannungsimpulse über eine Diode Dout erneut gleich, glättet sie über den Kondensator Cout und stellt sie als geregelte Ausgangsspannung Vout+ gegenüber einem Massepotential über einen sekundären Ausgang zur Verfügung.

Zur Regelung der sekundären Ausgangsspannung Vout+ umfasst die sekundäre Ausgangsschaltung 240 unter anderem einen Spannungsregler N, umfassend einen Spannungsteiler für die Ausgangsspannung Vout+ mit den Widerständen Rout1 und Rout2 sowie einer Schaltung mit den Komponenten R, R1 und C1 zum Bereitstellen einer Regelspannung. Beispielsweise handelt es sich um einen PI-Regler. Über einen Optokoppler U1 umfassend eine Leuchtdiode U1a und einen Phototransistor U1b wird in Abhängigkeit der Ausgangsspannung Vout+ eine Regelgröße Vcontrol für die Steuerschaltung 250 bereitgestellt. In Abhängigkeit der Regelgröße Vcontrol bestimmt die Steuerschaltung 250 eine Steuerspannung Vcomp. Die Steuerspannung Vcomp wird über den Vergleicher 280 mit einer vom Stromfluss durch das Schaltelement 220 abhängigen Knotenspannung Vshunt gegenüber dem Massepotential verglichen und zur Ansteuerung der Pulsweitensteuerung 270 verwendet.

Im dargestellten Ausführungsbeispiel umfasst die Pulsweitensteuerung 270 eine Ansteuerschaltung mit einen Setzeingang S und einen Rücksetzeingang R sowie eine Treiberschaltung zur Ansteuerung des Transistors Qp. Beim Anliegen eines Taktimpulses am Setzeingang S, der von der Oszillatorschaltung 260 mit einer festen Frequenz bereitgestellt wird, öffnet die Pulsweitensteuerung 270 das Schaltelement 220. Das Schaltelement 220 bleibt so lange eingeschaltet, bis ein Stromfluss durch das Schaltelement 220 und damit die Knotenspannung Vshunt an einem Nebenschlusswiderstand Rshunt über den durch die Steuerspannung Vcomp von der Steuerschaltung 250 vorgegebenen Regelwert ansteigt. Beim Übersteigen der Steuerspannung Vcomp wird das Schaltelement 220 durch Anlegen eines Rücksetzsignals am Rücksetzeingang R der Ansteuerschaltung unterbrochen.

Grundsätzlich ist es möglich, den Wirkungsgrad der unter Bezugnahme auf Figur 2 beschriebenen Schaltung zu erhöhen, indem der Oszillatortakt der Oszillatorschaltung 260 bei sehr niedriger Ausgangsleistung des Schaltnetzteils 200 abgesenkt wird. Aus akustischen Gründen ist eine Absenkung jedoch nur bis zu einer Grenze von etwa 20 bis 25 KHz sinnvoll, was in etwa der oberen Hörschwelle eines Menschen entspricht. Eine weitere Absenkung des Oszillatortaktes der Oszillatorschaltung 260 führt zum Auftreten von akustischen Störungen mit der Frequenz des Schalttaktes. Solche Störungen sind insbesondere unterhalb von 20 KHz für einen Menschen wahrnehmbar und stören diesen.

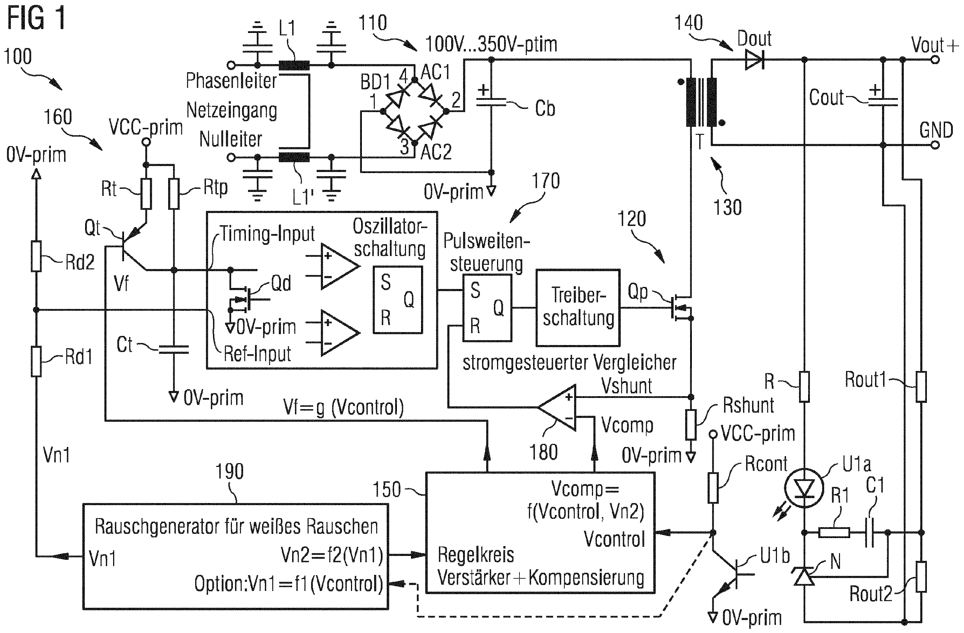

Figur 1 zeigt eine schematische Darstellung eines Schaltnetzteils 100 gemäß einer Ausgestaltung der Erfindung. Bei dem dargestellten Schaltnetzteil 100 handelt es sich wiederum um ein Schaltnetzteil nach dem Prinzip eines Sperrwandlers. Die nachfolgend beschriebenen Variationen gegenüber dem bekannten Schaltnetzteil 200 sowie das ebenfalls nachfolgend beschriebene Verfahren zum Betrieb des Schaltnetzteils 100 lassen sich jedoch auch mit anderen Typen von Schaltnetzteilen verwenden. Insbesondere eignet sich die beschriebene Lösung auch zur Verwendung in Gleichtakt-Flusswandlern und Gegentakt-Flusswandlern.

Das Schaltnetzteil 100 umfasst im dargestellten Ausführungsbeispiel eine primäre Eingangsschaltung 110, ein Schaltelement 120 und ein Speicherelement 130. Das Schaltnetzteil 100 umfasst des Weiteren eine sekundäre Ausgangsschaltung 140, eine Steuerschaltung 150 und eine Oszillatorschaltung 160. Das Schaltnetzteil 100 umfasst des Weiteren eine Pulsweitensteuerung 170, einen Vergleicher 180 und einen Rauschgenerator 190.

Die primäre Eingangsschaltung 110, das Schaltelement 120, das Speicherelement 130, die sekundäre Ausgangsspannung 140, die Pulsweitensteuerung 170 und der Vergleicher 180 entsprechen in ihrem Aufbau den gleichartigen Komponenten des zuvor beschriebenen Schaltnetzteils 200. Gegenüber dem zuvor beschriebenen Schaltnetzteil 200 unterscheidet sich das Schaltnetzteil 100 daher insbesondere dadurch, dass die Steuerschaltung 150 zusätzlich ein Steuersignal Vf zur Ansteuerung der Oszillatorschaltung 160 bereitstellt. Des Weiteren wird ein erstes Zufallssignal Vn1 von dem Rauschgenerator 190 an die Oszillatorschaltung 160 bereitgestellt. Bei der Oszillatorschaltung 160 handelt es sich um einen regel- oder abstimmbaren Oszillator, dessen Schaltzeitpunkt in Abhängigkeit der Eingangssignale Vn1 und Vf eingestellt werden kann.

Optional ist die sekundären Ausgangsschaltung 140 mit dem Rauschgenerator 190 über eine weitere Leitung verbunden, um die Amplitude des von dem Rauschgenerator 190 erzeugten ersten Zufallssignals Vn1 in Abhängigkeit der Regelgröße Vcontrol der sekundären Ausgangsschaltung 140 zu bestimmen. In einer weiteren vorteilhaften Ausgestaltung ist der Rauschgenerator 190 über eine weitere Leitung mit der Steuerschaltung 150 verbunden, um die Steuerspannung Vcomp zur Abschaltung des Schaltelementes 120 in Abhängigkeit eines zweiten Zufallssignals Vn2 des Rauschgenerators 190 zu bestimmen.

Gegenüber dem unter Bezugnahme auf die Figur 2 beschriebenen konventionellen Schaltnetzteil 200 wird die Funktionsweise des Schaltnetzteils 100 gemäß der Figur 1 wie folgt geändert. Die Regelgröße Vcontrol dient in der beschriebenen Ausgestaltung nicht nur zur Bestimmung der Steuerspannung Vcomp durch die Steuerschaltung 150, sondern auch zur Bestimmung des Steuersignals Vf zur Regelung des Oszillatortaktes der Oszillatorschaltung 160. Bei fallendem Ausgangsstrom des Schaltnetzteils 100 wird wegen der dadurch steigenden Netzteilausgangsspannung Vout+ über den Regler N und den Optokoppler U1 die Regelgröße Vcontrol abfallen. Das Steuersignal Vf, das über die Steuerschaltung 150 bereitgestellt wird, muss in diesem Fall in geeigneter Weise ansteigen, beispielsweise linear. Auf diese Weise wird ein Ladestrom eines Kondensators Ct der Oszillatorschaltung 160 reduziert. Infolgedessen reduzieren sich der Oszillatortakt der Oszillatorschaltung 160 und damit den Schalttakt des Schaltelementes 120 des Schaltnetzteils 100.

Ein Widerstand Rtp der Oszillatorschaltung 160 stellt hier symbolisch einen Parallelwiderstand dar, über den optional ein minimaler Oszillatortakt der Oszillatorschaltung 160 sichergestellt werden kann. Der Frequenzverstellbereich der Oszillatorschaltung 160 kann zum Beispiel dem Verhältnis von 1:25 entsprechen, beispielsweise also einem Frequenzbereich von 2 kHz bis 50 kHz. Im Beispiel des beschriebenen Sperrwandlers kann durch diese Frequenzvariation bei konstant gehaltenem Abschaltstrom des als Schaltelement 120 dienenden Transistor Qp die übertragene Leistung ebenfalls um den Faktor 25 abgesenkt werden, bei gleichzeitig um etwa den Faktor 25 abgesenkten Schaltverlusten.

Damit der resultierende, verhältnismäßig niedrige Schalttakt des Schaltelements 120 nicht als störendes akustisches Pfeifen hörbar wird, wird in dem dargestellten Ausführungsbeispiel gleichzeitig die Schaltschwelle der Oszillatorschaltung 160 über einen Steuereingang Ref-Input mit dem ersten Zufallssignal Vn1, zum Beispiel einem weißem Rauschen, variiert. In dem beschriebenen Ausführungsbeispiel wird nach jedem Oszillatortakt die Spannung des ersten Zufallssignals Vn1 des Rauschgenerators 190 auf einen neuen Zufallswert gebracht. Die maximale Amplitude des ersten Zufallssignals Vn1 wird dabei so eingestellt, dass der Ausgangsschalttakt der Oszillatorschaltung 160 zusätzlich um insgesamt ein bis zwei Oktaven symmetrisch um dessen mittleren Oszillatortakt variiert, der über das Steuersignal Vf bestimmt wird. In anderen Worten variiert die Periodendauer der Oszillatorschaltung 160 von 100 Prozent bei dem höchsten Schalttakt der Oszillatorschaltung 160 bis auf 200 beziehungsweise 400 Prozent bei dem niedrigsten Schalttakt der Oszillatorschaltung 160. Diese Variation des Schalttaktes der Oszillatorschaltung 160 durch den Rauschgenerator 190 erfolgt unabhängig von dem Steuersignal Vf, aber mit dem mittleren Oszillatortakt der Oszillatorschaltung 160.

Eine Bandbreite von ein bis zwei Oktaven ist vorteilhaft, um das akustische Pfeifen in ein subjektiv angenehmeres und vom Pegel her deutlich niedrigeres Rauschen umzuwandeln. Bevorzugt wird die relative Bandbreite von ein bis zwei Oktaven des Arbeitstaktes dabei zumindest im hörbaren Frequenzbereich weitestgehend konstant gehalten, um Probleme bei der Regelung des Netzteils 100 zu vermeiden.

In dem dargestellten Ausführungsbeispiel wird die Abschaltschwelle des Transistors Qp entsprechend der Steuerspannung Vcomp basierend auf der Regelgröße Vcontrol bestimmt. Dabei wird die Abschaltschwelle wegen der Absenkung des Schalttaktes bei geringem Ausgangsstrom der Ausgangsschaltung 140 aber nicht so stark reduziert wie bei der konventionellen Schaltung gemäß Figur 2.

Damit die übertragene Leistung des Netzteils 100 im Mittel nicht zu sehr durch das aufmodulierte Signal des Rauschgenerators 190 schwankt, wird der Abschaltstromwert entsprechend der Steuerspannung Vcomp in einer bevorzugten Ausgestaltung zusätzlich durch das zweite Zufallssignal Vn2 auf Grundlage des ersten Zufallssignals Vn1 des Rauschgenerators 190 variiert. Bevorzugt erfolgt die Variation derart, dass die im Mittel übertragene Energie je Schaltimpuls des Schaltelementes 120 trotz Variation des Schalttaktes durch das Rauschen im Wesentlichen unabhängig von dem ersten Zufallssignal Vn1 ist.

In der folgenden Betrachtung wird beispielhaft wieder vom Betrieb des in der Figur 1 dargestellten Sperrwandlers ausgegangen, bei dem der Übertrager T in einem lückenden Dreiecksbetrieb betrieben wird. Das heißt, der Übertrager T wird nach jedem Schaltimpuls vollständig abmagnetisiert (engl.: "discontinuous mode"). In diesem Fall ergibt sich folgender Zusammenhang:

Bei konstantem Übertrager-Abschaltstrom entsprechend einer gewählten Steuerspannung Vcomp ist die übertragene Leistung je Schaltimpuls proportional zum Schalttakt f. Der Energieinhalt eines Pulses mit variablem Abschaltstrom beträgt $E = 0,5 \times L \times I^2$, wobei L die Eingangsinduktivität des Übertragers T und I den Abschaltstrom kennzeichnen. Damit ergibt sich für die übertragene Leistung $P = f \times 0,5 \times L \times I^2$ mit f als Schalttakt. Um bei dem Beispiel des Sperrwandlers und bei Variation des Schalttaktes f durch ein erstes Zufallssignal Vn1 trotz des Rauschens keine Variation der momentan übertragenen Leistung P zu bewirken, muss der Strom I synchronisiert gegensinnig so geändert werden, dass die Momentanleistung gleich bleibt.

Im beschriebenen Ausführungsbeispiel ist dies der Fall, wenn der Strom I entsprechend dem Reziprokwert der Wurzel des Schalttaktes f nachgestimmt wird. Einfacher ausgedrückt: halbiert sich zum Beispiel der Schalttakt der Oszillatorschaltung 160, springt also die Periodendauer des Schalttaktes f durch das erste Zufallssignal Vn1 kurzfristig um den Faktor 2 nach oben, muss der Abschaltstrom in diesem Schaltzyklus über die Steuerspannung Vcomp um den Faktor Wurzel von Zwei vom einer mittleren Steuerspannung Vmean in Abwesenheit des ersten Zufallssignals Vn1 kurzfristig erhöht werden, also Vcomp = Vmean x 1,41. Der Betrag des zweiten Zufallssignal Vn2 entspricht in diesem Fall also mathematisch der Quadratwurzel des Betrags des ersten Zufallssignals Vn1, also $Vn2 = \sqrt{Vn1}$. Anschaulich entspricht dies einem vergrößertem Tastverhältnis des Schaltelements 120 bei verkleinertem Schalttakt der Oszillatorschaltung 160 und umgekehrt.

Der Mittelwert Vmean der Steuerspannung Vcomp selbst wird, wie oben beschrieben, von der Regelgröße Vcontrol bestimmt. Das bedeutet unter anderem, dass in dieser Betriebsart die Steuerspannung Vcomp alleine nicht den vollen Abschaltstrom des Transistors Qp, der der vollen Aussteuerung des Übertragers T entspricht, einstellen darf. Ansonsten bliebe für das Rauschen des Rauschgenerators 190 keine Aussteuerungsreserve übrig. Dies ist insbesondere bei der hier interessierenden niedrigen Ausgangsleistung des Schaltnetzteils 100 jedoch kein Problem.

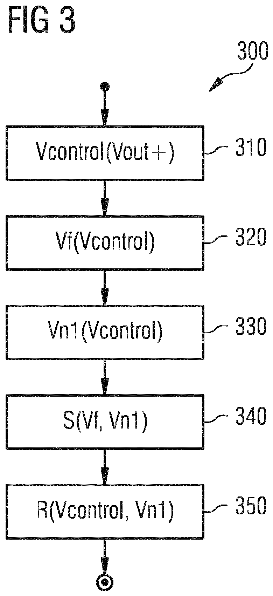

In der Figur 3 sind die Schritte eines Verfahrens 300 zum Betrieb des Schaltnetzteils 100 noch einmal schematisch dargestellt.

In einem ersten Schritt 310 wird eine Regelgröße Vcontrol der sekundären Ausgangsschaltung 140 bestimmt. Insbesondere wird im dargestellten Ausführungsbeispiel eine Steuerspannung bestimmt, die im Wesentlichen kurzfristig proportional einer Differenz aus einer Sollausgangsspannung abzüglich einer momentanen Ausgangsspannung Vout+ der sekundären Ausgangsschaltung 140 ist.

In einem Schritt 320 wird ein mittlerer Oszillatortakt in Abhängigkeit der im Schritt 310 bestimmten Regelgröße Vcontrol bestimmt. Insbesondere wird im Ausführungsbeispiel ein mittlerer Schalttakt durch Bereitstellung des Steuersignals Vf durch die Steuerschaltung 150 für die regelbare Oszillatorschaltung 160 eingestellt. Im Ausführungsbeispiel beginnt das Steuersignal Vf bei einer durch den Widerstand Rtp vorgegebenen minimalen Spannung und steigt dann weitgehend linear mit der Regelgröße Vcontrol an. Selbstverständlich sind auch andere Funktionen, bei digitaler Steuerung insbesondere ein schrittweise Erhöhen des Steuersignals Vf in Abhängigkeit der Regelgröße Vcontrol möglich.

In einem weiteren Schritt 330 wird eine zufällige Abweichung von dem mittleren Oszillatortakt bestimmt. Im beschriebenen Ausführungsbeispiel wird hierzu ein erstes Zufallssignal Vn1 zum Verstellen einer Schaltschwelle der Oszillatorschaltung 160 durch den Rauschgenerator 190 bereitgestellt. In einer bevorzugten Ausgestaltung ist die Bandbreite des Rauschsignals so gewählt, dass sie in etwa dem Umfang von ein bis zwei Oktaven bezogen auf den mittleren Oszillatortakt entspricht. Im Bereich oberhalb von 20 kHz kann das bereitgestellte erste Zufallssignal Vn1 optional in der Amplitude durch die Regelgröße Vcontrol der Ausgangsschaltung 140 reduziert werden, da die Regelgröße Vcontrol ein Maß der Ausgangslast am Spannungsausgang Vout+ und damit auch des mittleren Oszillatortakts ist.

In einem weiteren Schritt 340 wird ein Einschaltzeitpunkt eines Schaltelements 120 zum Laden des Speicherelementes 130 des Schaltnetzteils 100 bestimmt. Der Einschaltzeitpunkt für das Schaltelement 120 wird dabei in Abhängigkeit sowohl des mittleren Oszillatortakts der Oszillatorschaltung 160 als auch in Abhängigkeit der zufälligen Abweichung, die durch den Rauschgenerator 190 vorgegeben wird, bestimmt. Im Ausführungsbeispiel wird der mit dem mittleren Oszillatortakt arbeitende Oszillatorschaltung 160 bei Überschreiten bei der durch den Rauschgenerator 190 vorgegeben Schaltschwelle einen Schaltimpuls am Setzeingang S der Pulsweitensteuerung 270 bereitstellen, die den Transistor Qp einschaltet.

In einem weiteren Schritt 350 wird das Schaltelement 120 in Abhängigkeit der Regelgröße Vcontrol abgeschaltet. Hierzu wird im beschriebenen Ausführungsbeispiel eine Steuerspannung Vcomp über die Steuerschaltung 150 an den Vergleicher 180 bereitgestellt, der diese mit einer aktuellen Knotenspannung Vshunt zwischen dem Schalttransistor Qp und dem Widerstand Rshunt vergleicht. Über den Vergleicher 180 kann somit festgestellt werden, wann der Stromfluss durch die primärseitige Spule des Übertragers T und somit durch den Transistor Qp einen durch die Steuerschaltung 150 vorgegebenen Referenzwert überschreitet. Wird dieser Referenzwert überschritten, stellt der Vergleicher 180 ein geeignetes Steuersignal an dem Rücksetzeingang R der Pulsweitensteuerung 170 bereit, um das Schaltelement 120 zu öffnen.

Das oben beschriebene Verfahren 30 stellt sicher, dass ein Schaltnetzteil 100 bei geringer Ausgangsleistung mit einem Schalttakt in einem niederfrequenten Bereich, insbesondere im hörbaren Bereich, betrieben wird und dadurch sehr niedrige Schaltverluste aufweist. Gleichzeitig verursacht der Betrieb des Schaltnetzteiles auch bei verhältnismäßig niedrigem Schalttakt nur ein leichtes Rauschen mit niedrigem Pegel und ist daher gar nicht oder kaum hörbar.

Bei Schalttakten oberhalb des hörbaren Bereichs von etwa 20 kHz ist eine Modulation des Schalttaktes der Oszillatorschaltung 160 um ein bis zwei Oktaven selbstverständlich nicht erforderlich und schränkt die übertragbare Leistung durch die zusätzlich nötige Modulation des Abschaltstroms ein. Dies ergibt sich aus der oben dargestellten Betrachtung, weil bei einem beispielsweise minimalen Momentanschalttakt der Oszillatorschaltung 160 der Abschaltstrom des Transistors Qp und damit der Strom des durch den Übertrager T zum Ausgleich auf einen höheren Stromwert als bei einem höheren Schalttakt eingestellt werden soll. Die maximale Leistung des Netzteils 100 würde aber bei einem maximalen Schalttakt und einem gleichzeitigem maximalen Strom des Übertragers T erreicht. Bei 50 Prozent der Vollaussteuerung und höchstem Schalttakt der Oszillatorschaltung 160 wird dagegen nur ein Viertel der maximalen Leistung erreicht.

In einer bevorzugten Ausgestaltung kann die Modulationsbandbreite der Oszillatorschaltung 160 oberhalb von beispielsweise 25 kHz daher von zwei Oktaven auf einen deutlich niedrigeren Wert beschränkt oder vollständig abgeschaltet werden. Um keine Unstetigkeit in der Regelung einzuführen, sollte die Beschränkung der Rauschbandbreite dabei monoton und bevorzugt linear mit dem mittleren Oszillatortakt erfolgen.

Dies kann beispielsweise dadurch verwirklicht werden, dass die Vollaussteuerung der Steuerspannung Vcomp entsprechend dem Abschaltstrom durch die Regelgröße Vcontrol bei hoher Last bis zum vollen Endstrom des Übertragers T erfolgt und eine zusätzliche, in der Figur 1 nicht dargestellte Erkennungsschaltung eingeführt wird, die das erneute Einschalten des Transistors Qp über die Oszillatorschaltung 160 solange verhindert, bis der Übertrager T danach wieder vollständig abmagnetisiert ist. Dadurch wird indirekt eine Begrenzung des maximalen Schalttaktes f eingeführt, so dass bei hoher Last des Netzteils 100 die Modulation durch das Rauschen des Rauschgenerators 190 immer kleiner wird. Bei sehr niedriger Last ist dagegen der Takt f so niedrig, dass das erneute Einschalten des Transistors Qp ausschließlich durch die Oszillatorschaltung 160 bestimmt wird, mit einer durch das Rauschen des Rauschgenerators 190 hervorgerufenen Bandbreite von beispielsweise zwei Oktaven.

Eine weitere Alternative oder zusätzliche Ausgestaltung besteht darin, die Amplitude des Rauschgenerators 190 dann abzusenken, wenn der Schalttakt f oberhalb des hörbaren Bereichs liegt. Die volle Bandbreite von zum Beispiel zwei Oktaven ist bei einem Schalttakt von 5 bis 20 kHz beispielsweise noch vorteilhaft, während eine Variation von zum Beispiel 10 kHz bis 40 kHz nicht mehr nötig ist, da man Signalanteile oberhalb von 20 kHz nicht mehr wahrnimmt. Hier wäre demnach eine Oktave bereits ausreichend, um das durch das Absenken des Arbeitstaktes der Oszillatorschaltung 160 erzeugte Störsignal zu verdecken.

Die Reduzierung der Bandbreite kann durch die in der Figur 1 gestrichelt eingezeichnete Verbindung zwischen der Regelgröße Vcontrol und dem Rauschgenerator 190 erfolgen. Bei hoher Last am Ausgang Vout+ der sekundären Ausgangsschaltung 140 hat die Ausgangsspannung Vout+ eine Tendenz, abzusinken. Der Regler N reduziert daraufhin den Strom durch der Leuchtdiode U1a und die Regelgröße Vcontrol in Form der Spannung am Knoten zwischen dem Phototransistor U1b und dem Widerstand Rcont wird verhältnismäßig groß. In diesem Fall muss die Oszillatorschaltung 160 einen relativ hohen Schalttakt f aufweisen. Bei dieser Bedingung wird dann die maximale Amplitude des ersten Zufallssignals Vn1 des Rauschgenerators 190 reduziert werden, von beispielsweise zwei Oktaven bei minimaler Ausgangsleistung, also zum Beispiel von einem Verhältnis von 1:4 oder plus 300 Prozent, auf beispielsweise nur noch plus Zehn Prozent oder sogar Null Prozent bei maximaler Ausgangsleistung. Die weitere Absenkung der Amplitude des Zufallssignals trägt dabei auch zu einer verbesserten Funkentstörung bei.

Das Schaltnetzteil 100 sowie das Regelverfahren 300 wurden zuvor unter Bezugnahme auf eine diskrete, analoge Schaltung beschrieben. Selbstverständlich lassen sich alle zuvor beschriebenen Steuermaßnahmen auch mit Hilfe geeigneter digitaler Steuerkomponenten, insbesondere in Form von Steuercode eines Mikrocontrollers umsetzen. Somit können insbesondere Mikrocontroller zur Steuerung von Schaltnetzteilen derart programmiert werden, dass sie das Verfahren 300 durchführen und somit einen verbesserten Wirkungsgrad im Bereich einer niedrigen Ausgangsleistung erreichen.

Des Weiteren sind die beschriebenen Steuermaßnahmen und Schaltungsmodifikationen nicht auf den zuvor beschriebenen Sperrwandler beschränkt, sondern lassen sich auch auf weitere Schaltnetzteiltypen wie insbesondere Durchflusswandler, Tiefsetzsteller und Hochsetzsteller anwenden. Selbstverständlich sind dabei auch Schaltungen möglich, die mehr als ein Schalt- und/oder Speicherelement oder sogar mehrere sekundäre Ausgangsschaltungen aufweisen. Beispielsweise kann die oben beschriebene Schaltung derart abgewandelt werden, dass bei einem Gegentaktwandler die Schaltfrequenz von zwei oder mehr Schaltelementen gemäß den Vorgaben eines Zufallssignals variiert wird. Ebenfalls können andere Speicherelemente wie insbesondere Speicherkondensatoren oder Spulen Verwendung finden.

Bezugszeichenliste

| | |
|---|---|
| 100 | Schaltnetzteil |
| 110 | primäre Eingangsschaltung |
| 120 | Schaltelement |
| 130 | Speicherelement |
| 140 | sekundäre Ausgangsschaltung |
| 150 | Steuerschaltung |
| 160 | regelbare Oszillatorschaltung |
| 170 | Pulsweitensteuerung |
| 180 | Vergleicher |
| 190 | Rauschgenerator |
| 200 | Schaltnetzteil |
| 210 | primäre Eingangsschaltung |
| 220 | Schaltelement |
| 230 | Speicherelement |
| 240 | sekundäre Ausgangsschaltung |
| 250 | Steuerschaltung |
| 260 | Oszillatorschaltung |
| 270 | Pulsweitensteuerung |
| 280 | Vergleicher |
| | |
| 300 | Verfahren |
| 310 bis 350 | Verfahrensschritte |
| | |
| Vcomp | Steuerspannung |

Vcontrol    Regelgröße
Vout+       Ausgangsspannung
Vprim       Gleichspannung
Vshunt      Knotenspannung
Vf          Steuersignal
Vn1         erstes Zufallssignal
Vn2         zweites Zufallssignal


**Patentansprüche**

1.  Schaltnetzteil (100) für einen Computer umfassend:

    - wenigstens ein Schaltelement (120) zum Schalten eines Ladestroms zum Laden eines Speicherelementes (130);
    - wenigstens eine sekundäre Ausgangsschaltung (140) zum Bereitstellen einer Ausgangsspannung (Vout+);
    - wenigstens eine regelbare Oszillatorschaltung (160) zum Bereitstellen eines Schalttaktes;
    - einen Rauschgenerator (190) zum Erzeugen wenigstens eines Zufallssignals (Vnl, Vn2) zum Bestimmen einer zufälligen Abweichung; und
    - wenigstens eine Steuerschaltung (150) zum Bestimmen eines Ausschaltzeitpunkts für das wenigstens eine Schaltelement (120); wobei
    - im Betrieb des Schaltnetzteils (100) ein mittlerer Oszillatortakt der Oszillatorschaltung (160) in Abhängigkeit einer Regelgröße (Vcontrol) der sekundären Ausgangsschaltung (140) so geregelt wird, dass er in einem voll ausgelasteten Zustand des Computers oberhalb einer oberen Hörschwelle eines menschlichen Benutzers und in einem Bereitschaftszustand des Computers unterhalb der oberen Hörschwelle des menschlichen Benutzers liegt;
    - eine maximale Amplitude des wenigstens einen Zufallssignals (Vn1, Vn2) in einem Bereich oberhalb von 20 kHz durch die Regelgröße (Vcontrol) der Ausgangsschaltung (140) reduziert wird; und
    - ein Einschaltzeitpunkt für das wenigstens eine Schaltelement (120) in Abhängigkeit von dem mittleren Oszillatortakt und der zufälligen Abweichung bestimmt wird.

2.  Schaltnetzteil (100) nach Anspruch 1, **dadurch gekennzeichnet, dass** der mittlere Oszillatortakt in Abhängigkeit einer Ausgangsleistung der sekundären Ausgangsschaltung geregelt wird, wobei der mittlere Oszillatortakt monoton mit der Ausgangsleistung ansteigt.

3.  Schaltnetzteil (100) nach Anspruch 1 oder 2, **dadurch gekennzeichnet, dass** die Bandbreite der zufälligen Abweichung bezogen auf den mittleren Oszillatortakt mindestens eine Oktave umfasst.

4.  Schaltnetzteil (100) nach einem der Ansprüche 1 bis 3, **dadurch gekennzeichnet, dass** der Ausschaltzeitpunkt zusätzlich in Abhängigkeit der zufälligen Abweichung geregelt wird, derart dass bei einem Ansteigen des Schalttaktes auf einen Wert oberhalb des mittleren Oszillatortaktes ein Tastverhältnis des wenigstens einen Schaltelements (120) verringert und bei einem Abfallen des Schalttaktes auf einen Wert unterhalb des mittleren Oszillatortaktes das Tastverhältnis des wenigstens einen Schaltelements (120) vergrößert wird.

5.  Schaltnetzteil (100) nach einem der Ansprüche 1 bis 4, **dadurch gekennzeichnet, dass** durch den Rauschgenerator (190) das wenigstens eine Zufallssignal (Vnl, Vn2) für jeden Schalttakt der Oszillatorschaltung (160) neu erzeugt wird.

6.  Schaltnetzteil (100) nach einem der Ansprüche 1 bis 5, **dadurch gekennzeichnet, dass** der Rauschgenerator (190) dazu eingerichtet ist, die maximale Amplitude des wenigstens einen Zufallssignals (Vn1, Vn2) in Abhängigkeit der Regelgröße (Vcontrol) zu bestimmen.

7.  Betriebsverfahren (30) für ein Schaltnetzteil (100) eines Computers, umfassend die Schritte:

    - Bestimmen wenigstens einer Regelgröße (Vcontrol) einer sekundären Ausgangsschaltung (140);
    - Bestimmen eines mittleren Oszillatortaktes in Abhängigkeit der wenigstens einen bestimmten Regelgröße (Vcontrol), wobei der mittlere Oszillatortakt in einem voll ausgelasteten Zustand des Computers oberhalb einer oberen Hörschwelle eines menschlichen Benutzers und in einem Bereitschaftszustand des Computers unterhalb der oberen Hörschwelle des menschlichen Benutzers liegt;
    - Erzeugen wenigstens eines Zufallssignals (Vnl, Vn2) einer zufälligen Abweichung durch einen Rauschgenerator (190) zum Festlegen einer zufälligen Abweichung von dem mittleren Oszillatortakt, wobei eine maximale Amplitude des wenigstens einen Zufallssignals (Vnl, Vn2) in einem Bereich oberhalb von 20 kHz durch die Regelgröße (Vcontrol) der Ausgangsschaltung (140) reduziert wird;
    - Einschalten eines Schaltelements (120) zum Laden eines Speicherelements (130) in Abhängigkeit von dem mittleren Oszillatortakt und der zufälligen Abweichung; und
    - Ausschalten des Schaltelements (120) in Abhängigkeit der mindestens einen bestimmten Regelgröße (Vcontrol).

8. Verfahren nach Anspruch 7, **gekennzeichnet durch** den Schritt:

   - gegenläufiges Anpassen einer Einschaltdauer des Schaltelements (120) bezogen auf einen Schalttakt des Schaltelements (120).

9. Verfahren nach Anspruch 8, **dadurch gekennzeichnet, dass** im Schritt des Ausschaltens zusätzlich die festgelegte zufällige Abweichung derart berücksichtigt wird, dass für eine gegebene Ausgangsleistung des Schaltnetzteils (100) in jedem Schaltzyklus des Schaltelements (120) im Wesentlichen dieselbe Energie an das Speicherelement (130) übertragen wird.

10. Verfahren nach einem der Ansprüche 7 bis 9, wobei der Schritt des Ausschaltens des Schaltelements (120) folgende Schritte umfasst:

    - Bestimmen eines maximalen Ladestroms für das mindestens eine Speicherelement (130) in Abhängigkeit einer momentanen Ausgangsleistung der sekundären Ausgangsschaltung (140) ;
    - Bestimmen eines momentanen Ladestroms des mindestens einen Speicherelements (130);
    - Vergleichen des momentanen Ladestroms mit dem maximalen Ladestrom; und
    - Ausschalten des Schaltelements (120), wenn der momentane Ladestrom den maximalen Ladestrom übersteigt.

**Claims**

1. Switched-mode power supply (100) for a computer comprising:

   - at least one switching element (120) for switching a charging current for charging a storage element (130);
   - at least one secondary output circuit (140) for providing an output voltage (Vout+);
   - at least one controllable oscillator circuit (160) for providing a switching clock;
   - a noise generator (190) for generating at least one random signal (Vnl, Vn2) for determining a random deviation; and
   - at least one control circuit (150) for determining a switch-off time for the at least one switching element (120); wherein
   - during operation of the switched-mode power supply (100), an average oscillator clock of the oscillator circuit (160) is controlled depending on a controlled variable (Vcontrol) of the secondary output circuit (140) in such a way that, in a state in which the computer is working to full capacity, said average oscillator clock is above an upper hearing threshold of a human user and, in a standby state of the computer, is below the upper hearing threshold of the human user;
   - a maximum amplitude of the at least one random signal (Vnl, Vn2) is reduced in a range above 20 kHz by the controlled variable (Vcontrol) of the output circuit (140); and
   - a switch-on time for the at least one switching element (120) is determined depending on the average oscillator clock and the random deviation.

2. Switched-mode power supply (100) according to Claim 1, **characterized in that** the average oscillator clock is controlled depending on an output power of the secondary output circuit, wherein the average oscillator clock rises monotonically with the output power.

3. Switched-mode power supply (100) according to Claim 1 or 2, **characterized in that** the bandwidth of the random deviation referred to the average oscillator clock comprises at least one octave.

4. Switched-mode power supply (100) according to one of Claims 1 to 3, **characterized in that** the switch-off time is also controlled depending on the random deviation in such a way that a duty cycle of the at least one switching element (120) is decreased when the switching clock rises to a value above the average oscillator clock and the duty cycle of the at least one switching element (120) is increased when the switching clock falls to a value below the average oscillator clock.

5. Switched-mode power supply (100) according to one of Claims 1 to 4, **characterized in that** the at least one random signal (Vn1, Vn2) is regenerated for each switching clock of the oscillator circuit (160) by the noise generator (190).

6. Switched-mode power supply (100) according to one of Claims 1 to 5, **characterized in that** the noise generator (190) is configured to determine the maximum amplitude of the at least one random signal (Vn1, Vn2) depending on the controlled variable (Vcontrol).

7. Operating method (30) for a switched-mode power supply (100) of a computer, comprising the following steps:

   - determination of at least one controlled variable (Vcontrol) of a secondary output circuit (140);

- determination of an average oscillator clock depending on the at least one determined controlled variable (Vcontrol), wherein, in a state in which the computer is working to full capacity, the average oscillator clock is above an upper hearing threshold of a human user and, in a standby state of the computer, is below the upper hearing threshold of the human user;
- generation of at least one random signal (Vn1, Vn2) of a random deviation by a noise generator (190) for ascertaining a random deviation from the average oscillator clock, wherein a maximum amplitude of the at least one random signal (Vn1, Vn2) is reduced in a range above 20 kHz by the controlled variable (Vcontrol) of the output circuit (140);
- switch-on of a switching element (120) for charging a storage element (130) depending on the average oscillator clock and the random deviation; and
- switch-off of the switching element (120) depending on the at least one determined controlled variable (Vcontrol).

8. Method according to Claim 7, **characterized by** the following step:

- reverse adaptation of a switch-on duration of the switching element (120) referred to a switching clock of the switching element (120).

9. Method according to Claim 8, **characterized in that** the ascertained random deviation is also taken into account in the switch-off step in such a way that, for a given output power of the switched-mode power supply (100), essentially the same energy is transmitted to the storage element (130) in each switching cycle of the switching element (120).

10. Method according to one of Claims 7 to 9, wherein the step of switching off the switching element (120) comprises the following steps:

- determination of a maximum charging current for the at least one storage element (130) depending on an instantaneous output power of the secondary output circuit (140);
- determination of an instantaneous charging current of the at least one storage element (130);
- comparison of the instantaneous charging current with the maximum charging current; and
- switch-off of the switching element (120) when the instantaneous charging current exceeds the maximum charging current.

**Revendications**

1. Bloc d'alimentation à découpage (100), destiné à un ordinateur, comprenant :

- au moins un élément de commutation (120), destiné à commuter un courant de charge pour charger un élément de stockage (130) ;
- au moins un circuit de sortie secondaire (140), destiné à mettre à disposition une tension de sortie (Vout+) ;
- au moins un circuit oscillateur (160) réglable, destiné à mettre à disposition une horloge de commutation ;
- un générateur de bruit (190), destiné à générer au moins un signal aléatoire (Vn1, Vn2), pour déterminer un écart aléatoire ; et
- au moins un circuit de commande (150), destiné à déterminer un moment de mise à l'arrêt pour l'au moins un élément de commutation (120) ;
- pendant le fonctionnement du bloc d'alimentation à découpage (100), une horloge moyenne d'oscillateur du circuit oscillateur (160) étant réglée en fonction d'une grandeur de réglage (Vcontrol) du circuit de sortie secondaire (140), de telle sorte que dans un état de pleine charge de l'ordinateur, elle se situe au-delà d'un seuil d'audition supérieur d'un utilisateur humain et dans un état de veille de l'ordinateur, elle se situe en-dessous du seuil d'audition supérieur de l'utilisateur humain ;
- une amplitude maximale de l'au moins un signal aléatoire (Vnl, Vn2) étant réduite dans un ordre au-delà de 20 kHz par la grandeur de réglage (Vcontrol) du circuit de sortie (140) ; et
- un moment de mise en route pour l'au moins un élément de commutation (120) étant déterminé en fonction de l'horloge moyenne d'oscillateur et l'écart aléatoire étant déterminé.

2. Bloc d'alimentation à découpage (100) selon la revendication 1, **caractérisé en ce que** l'horloge moyenne d'oscillateur est réglée en fonction d'une puissance de sortie du circuit de sortie secondaire, l'horloge moyenne d'oscillateur croissant de manière monotone avec la puissance de sortie.

3. Bloc d'alimentation à découpage (100) selon la revendication 1 ou 2, **caractérisé en ce que** la bande passante de l'écart aléatoire, en rapport à l'horloge moyenne d'oscillateur comprend au moins une octave.

4. Bloc d'alimentation à découpage (100) selon l'une quelconque des revendications 1 à 3, **caractérisé en ce que** le moment de mise à l'arrêt est réglé en supplément en fonction de l'écart aléatoire, de telle sorte que lors d'une montée de l'horloge de commutation à une valeur au-delà de l'horloge moyenne d'oscillateur, un rapport cyclique de l'au moins un élément de commutation (120) se réduise et lors d'une chute de l'horloge de commutation à une valeur en-dessous de l'horloge moyenne d'oscillateur, le rapport cyclique de l'au moins un élément de commutation (120) s'agrandisse.

**5.** Bloc d'alimentation à découpage (100) selon l'une quelconque des revendications 1 à 4, **caractérisé en ce que** par le générateur de bruit (190), l'au moins un signal aléatoire (Vn1, Vn2) est regénéré pour chaque horloge de commutation du circuit oscillateur (160).

**6.** Bloc d'alimentation à découpage (100) selon l'une quelconque des revendications 1 à 5, **caractérisé en ce que** le générateur de bruit (190) est aménagé pour déterminer l'amplitude maximale de l'au moins un signal aléatoire (Vn1, Vn2) en fonction de la grandeur de réglage (Vcontrol).

**7.** Procédé de fonctionnement (30) d'un bloc d'alimentation à découpage (100) d'un ordinateur, comprenant les étapes consistant à :

    - déterminer au moins une grandeur de réglage (Vcontrol) d'un circuit de sortie secondaire (140) ;
    - déterminer une horloge moyenne d'oscillateur en fonction de l'au moins une grandeur de réglage (Vcontrol) déterminée, dans un état de pleine charge de l'ordinateur, l'horloge moyenne d'oscillateur se situant au-delà d'un seuil d'audition supérieur d'un utilisateur humain et dans un état de veille de l'ordinateur, se situant en-dessous du seuil d'audition supérieur de l'utilisateur humain ;
    - générer au moins un signal aléatoire (Vn1, Vn2) d'un écart aléatoire par un générateur de bruit (190), pour déterminer un écart aléatoire par rapport à l'horloge moyenne d'oscillateur, une amplitude maximale de l'au moins un signal aléatoire (Vn1, Vn2) étant réduite à un ordre de plus de 20 kHz par la grandeur de réglage (Vcontrol) du circuit de sortie (140) ;
    - mettre en route un élément de commutation (120) pour charger un élément de stockage (130) en fonction de l'horloge moyenne d'oscillateur et de l'écart aléatoire ; et
    - mettre à l'arrêt l'élément de commutation (120) en fonction de l'au moins une grandeur de réglage (Vcontrol) déterminée.

**8.** Procédé selon la revendication 7, **caractérisé par** l'étape consistant à :

    - adapter inversement une durée de mise en route de l'élément de commutation (120) en rapport à une horloge de commutation de l'élément de commutation (120) .

**9.** Procédé selon la revendication 8, **caractérisé en ce que** dans l'étape de la mise à l'arrêt, en supplément, l'écart aléatoire déterminé est pris en compte de telle sorte que pour une puissance de sortie donnée du bloc d'alimentation à découpage (100), lors de chaque cycle de commutation de l'élément de commutation (120), sensiblement la même énergie est transmise à l'élément de stockage (130).

**10.** Procédé selon l'une quelconque des revendications 7 à 9, l'étape de la mise à l'arrêt de l'élément de commutation (120) comprenant les étapes suivantes, consistant à :

    - déterminer un courant de charge maximal pour l'au moins un élément de stockage (130), en fonction d'une puissance de sortie momentanée du circuit de sortie secondaire (140) ;
    - déterminer un courant de charge momentané de l'au moins un élément de stockage (130) ;
    - comparer le courant de charge momentané avec le courant de charge maximal ; et
    - mettre à l'arrêt l'élément de commutation (120), si le courant de charge momentané dépasse le courant de charge maximal.

FIG 1

# FIG 2

EP 2 721 727 B1

FIG 3

300

Vcontrol(Vout+) — 310

Vf(Vcontrol) — 320

Vn1(Vcontrol) — 330

S(Vf, Vn1) — 340

R(Vcontrol, Vn1) — 350

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100315838 A1
- US 20110110126 A1

**In der Beschreibung aufgeführte Nicht-Patentliteratur**

- **M. KUISMA.** Variable Frequency Switching in Power Supply EMI-Control. *IEEE AES Systems Magazin,* Dezember 2003